Europäisches Patentamt

European Patent Office

Office européen des brevets

(19)

(11) Veröffentlichungsnummer: **0 135 652**
**B1**

(12) ## EUROPÄISCHE PATENTSCHRIFT

(45) Veröffentlichungstag der Patentschrift:
**07.10.87**

(21) Anmeldenummer: **84103651.0**

(22) Anmeldetag: **03.04.84**

(51) Int. Cl.⁴: **F 15 B 21/08,** F 15 B 13/043,
B 29 C 45/00, B 22 D 17/32,
G 05 B 19/00

(54) **Spritzgiessmaschine mit hydraulischer Steuerung.**

(30) Priorität: **27.05.83 DE 3319268**

(43) Veröffentlichungstag der Anmeldung:
**03.04.85 Patentblatt 85/14**

(45) Bekanntmachung des Hinweises auf die Patenterteilung:
**07.10.87 Patentblatt 87/41**

(84) Benannte Vertragsstaaten:
**AT CH FR GB IT LI NL**

(56) Entgegenhaltungen:
**AT - B - 332 111**
**DE - A - 1 638 165**
**DE - A - 2 202 223**
**DE - A - 2 840 831**
**DE - A - 3 032 407**
**DE - A - 3 105 841**
**DE - B - 1 554 963**
**DE - B - 1 638 128**

**REGELUNGSTECHNISCHE PRAXIS, 17. Jahrgang, Heft 9, September 1975, München. W. ALLERDISSE: "Messen, Regeln und Steuern an Spritzgießmaschinen" Seiten 266-273**
**SIEMENS ENERGIETECHNIK, 4. Jahrgang, Heft 5/82, September/Oktober 1982, Berlin-München. B. KESSELHUT, H. MATTHIESEN: "Fortschrittliches Automatisieren von Kunststoffverarbeitungsmaschinen mit dem Mikrocomputer S5-210A", Seiten 226-229**

(73) Patentinhaber: **KLÖCKNER-WERKE AKTIENGESELLSCHAFT, Klöcknerstrasse 29, D-4100 Duisburg 1 (DE)**

(72) Erfinder: **Jung, Dieter, Unterberg 310 A, D-7831 Freiamt-Ottoschwandern (DE)**

(74) Vertreter: **Kiefer, Winfried, Dipl.-Phys., Klöckner-Werke Aktiengesellschaft Patentabteilung Klöcknerstrasse 29, D-4100 Duisburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Spritzgiessmaschine mit einer mit einem Wegmesssystem gekoppelten Formaufspannplatte, einem beidseitig beaufschlagbaren hydraulischen Arbeitszylinder zur Betätigung der Formaufspannplatte und einer hydraulischen Steuerung mit mindestens einem vorgesteuerten ⅓-Wegeventil zur Steuerung des Arbeitszylinders.

In Steuerungen für Spritzgiessmaschinen kommen prinzipiell Wegeventile, insbesondere Proportionalventile, zum Einsatz. Diese Ventile weisen stets, bedingt durch die Fertigungstoleranzen, eine, wenn auch geringe Überdeckung auf, die im Laufe der Zeit während des Einsatzes der Ventile abnimmt. Diese gewünschte geringe Überdeckung ist ein Mass für die Positioniergenauigkeit z.B. der verschiebbaren Formaufspannplatte. Durch den stets vorhandenen Verschleiss lässt sich nach längerer Betriebszeit nicht vermeiden, dass auch in Nullage geringe Arbeitsmittelströme fliessen, d.h. Leckverluste auftreten. Diese Ventile haben den gravierenden Nachteil, dass beispielsweise bei Störungen im Vorsteuerteil die verschiebbare Formaufspannplatte einer Spritzgiessmaschine nicht sofort zum Stillstand kommt, was zu erheblichen Schäden an der Spritzgiessmaschine und auch zu Betriebsunfällen führen kann. Man könnte zwar daran denken, Servoventile, die praktisch keine Überdeckung aufweisen, zum exakten Positionieren einzusetzen. Servoventile sind jedoch für den Einsatz an Spritzgiessmaschinen zu störanfällig und erfordern die Verwendung eines praktisch abriebfreien hydraulischen Arbeitsmittels, eine Bedingung, die bei Spritzgiessmaschinen nicht ohne unwirtschaftlich hohen Aufwand einzuhalten ist.

Es sind weiterhin hydraulisch vorgesteuerte federzentrierte Wegeventile bekannt. Bei Störungen im Vorsteuerteil gehen sie ohne weiteres in die Nullage. Sie weisen jedoch eine grosse Überdeckung auf, so dass sie bisher zum Positionieren bei Spritzgiessmaschinen nicht zum Einsatz gekommen sind. Darüber hinaus werden immer grössere Anforderungen an die Positioniergenauigkeit gestellt, z.B. dann, wenn Spritzgiessmaschinen im vollautomatischen Betrieb eingesetzt werden und Roboter die hergestellten Spritzteile aus der geöffneten Spritzgiessform entnehmen sollen. Hier erhebt sich die Forderung, dass im Störfall von vornherein die verschiebbare Formaufspannplatte sofort zum Stillstand kommt.

Spritzgiessmaschinen der einleitend erwähnten Art mit einer mit einem Wegmesssystem gekoppelten Formaufspannplatte sind bekannt (DE-A-3032 407).

Es erfolgt ein Istwert-Sollwert-Vergleich der Geschwindigkeit der verschiebbaren Formaufspannplatte in Abhängigkeit ihres Abstandes von der feststehenden Formaufspannplatte der Spritzgiessmaschine zur Abgabe von Steuersignalen für den Fahrzylinder, indem ein Verstärker mit parallelen, in Abhängigkeit vom Plattenabstand aktivierten Gegenkopplungszweigen vorgesehen ist, deren Verstärkungsfaktoren in Abhängigkeit vom Plattenabstand vorgegeben sind.

Durch diese Massnahmen wird erreicht, dass stets in der letzten Phase das Schiessen der Spritzgiessform mit der Kriechgeschwindigkeit erfolgt, ohne dass die Reibungseinflüsse usw. auf den Holmen eine Rolle spielen.

Der Erfindung liegt hingegen die Aufgabe zugrunde, eine Spritzgiessmaschine der eingangs erwähnten Art so auszubilden, dass ein genaues Positionieren unter Einsatz von hydraulisch vorgesteuerten federzentrierten ⅓-Wegeventilen gewährleistet ist.

Die Aufgabe wird erfindungsgemäss dadurch gelöst, dass das vorgesteuerte ⅓-Wegeventil ein hydraulisch vorgesteuertes ⅓-Wegeventil ist, die Steuerkolben des ⅓-Wegeventils und seines ⅓-Vorsteuerwegeventils jeweils mit einem Wegmesssystem unter Bildung eines Regelkreises gekoppelt sind, dem Wegmesssystem für die verschiebbare Formaufspannplatte ein Rechner nachgeschaltet ist, der aus dem die Iststellung der verschiebbaren Formaufspannplatte repräsentierenden Wert die Abweichung von der Sollstellung errechnet und dann einen Korrekturwert bildet, der zu dem Sollwert für die Stellung der verschiebbaren Formaufspannplatte hinzuaddiert und als korrigierter Sollwert einer Vergleichsstelle zugeführt ist, an der es mit dem Ausgangssignal des Wegmesssystems des federzentrierten Hauptsteuerventils verglichen ist, dass das von der Vergleichsstelle gebildete Differenzsignal einer weiteren Vergleichsstelle zugeführt ist, an der es mit dem Ausgangssignal des Wegmesssystems des Vorsteuerventils verglichen ist, und dass das in der weiteren Vergleichsstelle gebildete Vergleichssignal einem proportional wirkenden Stellantrieb des Vorsteuerventils zugeführt ist.

Durch diese Massnahmen wird eine hohe Betriebssicherheit im Störfall und eine überraschend hohe Positioniergenauigkeit erreicht. Die Bildung des Korrekturwertes erfolgt erfindungsgemäss nach jedem Spritzzyklus. Dieser Korrekturwert wird nach Überschreiten eines vorgegebenen Maximalwertes zu dem Sollwert für den Regelkreis unter Bildung eines neuen, d.h. korrigierten Sollwertes für den nachfolgenden Spritzzyklus hinzuaddiert. Es zeigte sich, dass durch eine entsprechende Bemessung der elektronischen Komponenten der erfindungsgemässen hydraulischen Steuerung eine Positionierung ohne weiteres auf etwa ¹⁄₁₀ mm genau erreichbar ist. Hinzu tritt noch, dass durch den stets vorhandenen Abrieb die Überdeckung abnimmt, deren Änderungen durch die erfindungsgemässen Massnahmen ausgeregelt werden.

In einer noch weiteren Ausgestaltung der Erfindung ist der Steuerkolben des hydraulisch vorgesteuerten federzentrierten ⅓-Wegeventils ein oszillierender Steuerkolben. Durch diese Massnahmen wird die Ansprechwahrscheinlichkeit in die Genauigkeit der erfindungsgemässen hydraulischen Steuerung weiter verbessert, da bei der Umschaltung des vorgesteuerten Wegeventils vermieden ist, dass zunächst die Haftreibung eines in Ruhe befindlichen Steuerkolbens überwunden werden muss, die bekanntlich höher ist als die Haftreibung eines sich bewegenden Steuerkolbens.

Die Erfindung ist in der Zeichnung anhand eines Ausführungsbeispieles erläutert. Es zeigen:

Fig. 1 den hydraulischen Schaltplan des Ausführungsbeispiels und

Fig. 2 den elektronischen Schaltplan des Ausführungsbeispiels in Fig. 1.

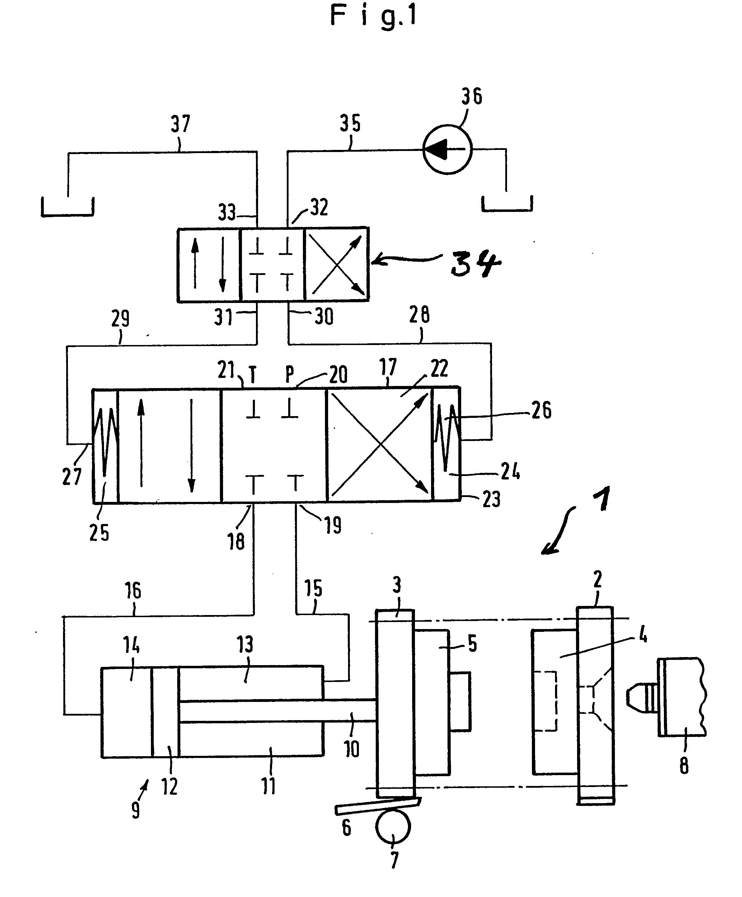

Fig. 1 zeigt den hydraulischen Schaltplan des Ausführungsbeispiels. Mit 1 ist die schematisch dargestellte Spritzgiessmaschine bezeichnet. Mit 2 ist die feststehend angeordnete Formaufspannplatte, mit 3 die auf nicht bezifferten Holmen verschiebbar geführte Formaufspannplatte bezeichnet, die auf den zueinander zeigenden Seiten die Hälfte 4 bzw. 5 einer geteilten Spritzgiessform aufweisen. Mit 6 ist eine mit der verschiebbaren Formaufspannplatte gekoppelte Zahnstange bezeichnet, die mit einem absoluten Winkelkodierer 7 in Eingriff steht. Auf der von der Form abgewandten Seite der feststehenden Formaufspannplatte ist in an sich bekannter Weise das Spritzaggregat 8 verschiebbar geführt.

Die verschiebbare Formaufspannplatte ist auf ihrer von der Form abgewandten Seite mit der Kolbenstange 10 des Arbeitszylinders 9 verbunden. Der Steuerkolben 12 des Arbeitszylinders unterteilt den Zylinder in die beiden Druckräume 13 und 14, die über eine Leitung 15 bzw. 16 mit dem ersten Anschluss 19 bzw. zweiten Anschluss 18 des hydraulischen vorgesteuerten federzentrierten $\frac{2}{3}$-Wegeventils 17 verbunden sind. Der erste Anschluss 20 ist mit der Pumpe, der zweite Anschluss 21 ist mit dem Tank verbunden. Der Steuerkolben 22 des hydraulisch vorgesteuerten federzentrierten $\frac{2}{3}$-Wegeventils 17 ist in dem Gehäuse 23 unter Ausbildung der beiden Steuerräume 24 und 25 unter der Vorspannung der Druckfedern 26 bzw. 27 angeordnet.

Von diesen Steuerräumen führt die Leitung 28 bzw. 29 zu dem ersten bzw. zweiten Anschluss 30 bzw. 31 des $\frac{2}{3}$-Wegeventils 34, das das Vorsteuerventil für das hydraulisch vorgesteuerte federzentrierte $\frac{2}{3}$-Wegeventil 17 ist. Der dritte Anschluss 32 des $\frac{2}{3}$-Wegeventils 34 ist über eine Leitung 35 der Pumpe 36 aufgeschaltet, während der vierte Anschluss 33 über ein Leitung 37 mit dem Tank verbunden ist. In der Ruhestellung bzw. Nullstellung wird der Steuerkolben 22 in seiner Mittelstellung durch die Druckfedern 26 und 27 gehalten. Der Steuerkolben ist ein oszillierender Steuerkolben.

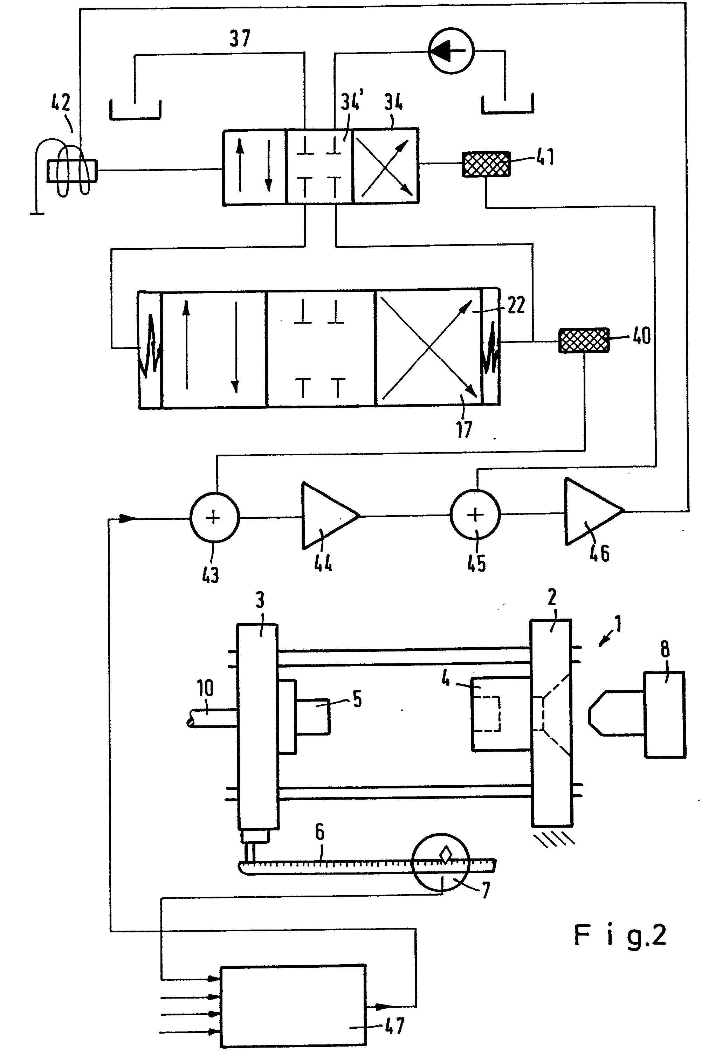

Fig. 2 zeigt die elektronische Schaltung des Ausführungsbeispiels. Gleiche Teile sind mit gleichen Bezugszeichen bezeichnet. Der Steuerkolben 22 des hydraulisch vorgesteuerten federzentrierten $\frac{2}{3}$-Wegeventils 17 ist mit einem Wegmesssystem 40, der Steuerkolben 34' des $\frac{2}{3}$-Vorsteuerventils ist mit einem Wegmesssystem 41 und weiterhin mit dem an sich bekannten Stellantrieb 42 gekoppelt. Die Wegmesssysteme 7, 40 und 41 sind absolute Winkelschrittgeber (Prospekt der Fa. Stegmann, Optoelectronische absolute Winkelschrittgeber).

Die Ausgangssignale des Wegmesssystems 7 werden dem Rechner 47 zugeführt, der anhand eines gespeicherten Programmes, das im folgenden erläutert wird, aus dem die die Iststellung der verschiebbaren Formaufspannplatte repräsentierenden Werte die Abweichung von der Sollstellung errechnet und dann einen Korrekturwert bildet, der zu dem Sollwert für die Stellung bzw. Position der verschiebbaren Formaufspannplatte hinzuaddiert und als korrigierter Sollwert der Vergleichsstelle 43 zugeführt wird. Das Differenzsignal gelangt über den Vorverstärker 44 zu der weiteren Vergleichsstelle 45, an der es mit dem Ausgangssignal 41 des Wegmesssystems 41 verglichen wird. Das gebildete Vergleichssignal wird über den Endverstärker 46 dem Stellantrieb 42 zugeführt.

Das erstellte Programm läuft in folgenden Schritten ab.

1. Anfahren der eingestellten Position
2. Istwert-Erfassung des Weges
3. Sollwert-Istwert-Vergleich des Weges
4. Ablegen der Differenz als Korrektur-Konstante
5. Addition des Sollwertes für den Weg zur Konstanten
6. Anfahren der Position unter dem neuen Sollwert für den Weg.

Die einzelnen Schritte sind durch das folgende Programm in der Iscos-Sprache für einen Iscos-Rechner 60 der Fa. Philips erläutert.

Positionieren

Bei den Spritzgiess-Maschinen war es in der Vergangenheit mit den zur Verfügung stehenden Mitteln nicht möglich, ein relativ genaues Positionieren der Schliess-Einheit auf den Bruchteil eines Millimeters zu erreichen. Erst mit Einführung von komfortablen Rechnern bot sich solche Möglichkeit an. Das gesteckte Ziel ± 1 mm zu erreichen, machte die Einführung eines Multi-Prozessorsystems notwendig. Die Aufgaben an den Rechnern musste dezentralisiert werden, um genügend Rechenzeit für das eigentliche Positionieren zur Verfügung zu haben. Das Erfassen ist dabei eine der Grundvoraussetzungen, aus dem die Istposition sowie die Geschwindigkeit abgeleitet werden. Die positive Beschleunigung wie auch das Abbremsen (negative Beschleunigung) müssen quadratisch erfolgen; das heisst, es muss grundsätzlich eine Parabol-Funktion gefahren werden. Nur diese Art der Parameterverarbeitung sichert ein ruckfreies Anfahren wie auch genaues Anhalten an der gewünschten Position; ohne unnötige Energie zu verbrauchen.

Fail-Safe

Um die gestellten Aufgaben zu lösen, dürfen Fail-Safe-Betrachtungen nicht in den Hintergrund rücken.

Die Verwendung von Servo-Ventilen würde mit Sicherheit einiges vereinfachen, machen jedoch eine Reihe von Massnahmen notwendig, um ein unkontrolliertes Verfahren der Schliess-Einheit zu verhindern. Ein nicht gewolltes «Öffnen» der Regelschleife hätte fatale Folgen mit hohen Schäden an den benutzten Werkzeugen. Der Aufwand an redundanten Mitteln ist unverhältnismässig hoch und schliesst somit eine Verwendung von Servo-Ventilen auf der Schliess-Seite aus.

Bei dem verwendeten 2 Quadrat-Proportional-Ventil ist bei einem Gesamtweg des Kolbens von ±6 mm eine Überdeckung von ±0,4 mm vorhanden. Diese Überdeckung wird federzentriert, sobald die Regelschleife unterbrochen oder kurzgeschlossen wird (Rückführung der Kolben), das Hydrauliköl wird im Fahrzylinder eingesperrt und lässt keine weitere Bewegung der Schliess-Einheit zu.

Die Entscheidung fiel deshalb zugunsten des Proportional-Ventils für den Antrieb der Schliess-Seite.

Der Regelkreis

Wie bereits erwähnt, handelt es sich um einen übergeordneten P-Regler, um ein stabiles Arbeiten zu ermöglichen.

Ein J-Regler würde aufgrund der Phasenverschiebung und der relativ langen Ansprechempfindlichkeit von ca. 30 ms sehr unstabil sein, hätte aber den Vorteil, dass die Überdeckung des Kolbens keine grosse Rolle mehr spielen würde. Ob sich hier mal eine andere Lösungsmöglichkeit anbietet, bleibt abzuwarten.

Der P-Regler hat jedoch den gravierenden Nachteil, dass die Fertigungstoleranzen vom Ventilgehäuse wie auch vom Ventilkolben sich unangenehm bemerkbar machen. Je nach Toleranz wird naturgemäss auch eine andere Sollposition angefahren, dieser unerwünschte Nebeneffekt wird mit Hilfe des Rechners eliminiert. Ein zweites Problem ist ebenfalls durch die Überdeckung verursachtes Fehlpositionieren und langsames Nachkriechen bis auf Kolbenmittelstellung, hier hilft ein einfacher Schaltungskniff, indem man die Verstärkung bis kurz vor Beginn der Steuerkante stark erhöht. Elektrisch gesehen ist dann die Überdeckung nahezu Null und ein gutes Positionieren auf ca. 0,3 mm absolut möglich. Erwähnt sei auch noch, dass der Sollwert mit einem Dithersignal überlagert ist, um eine möglichst kleine Hysterese zu haben. Die Geometrie des Kolbens ist im unteren Bereich stark progressiv, um ein langsames Fahren der Schliess-Einheit ruckfrei trotz der hohen hydraulischen Verstärkung zu ermöglichen.

Die Software-Lösung

Das Programm ist in ISCOS-Sprache geschrieben, dies ist eine spezifisch höhere Sprache für Industrie-Anwendungen.

Die Lösung des Problems besteht eigentlich darin, dass man die Überdeckung des Ventilkolbens in einem Messzyklus ermittelt. Es spielt nun keine Rolle mehr, ob Abnützungen am Ventil oder selbst nach Auswechseln des gesamten Ventils die Überdeckung kompensiert, das Ergebnis ist in jedem Fall ein genaues Anfahren der Sollposition.

Nun in Stichworten das sequentielle Programm:
– Maschine ist im Einrichtbetrieb und die Form ist geschlossen.
– Aktivieren des Messzyklus-Programm-Teils.
– Überlaufkonstante + Formhöhe + Formöffnungsweite als Summe für Sollposition laden.
– Maschine fährt auf, kann aufgrund der Überdeckung die Sollposition nie erreichen.
– Istwertposition erfassen und von der Sollwertposition subtrahieren, dieser Wert ist die ausgemessene Überdeckung.
– Dem Korrekturwert wird eine zweite Überlaufkonstante zugeschlagen, um sicherzustellen, dass die Sollposition immer um 0,3 mm überlaufen wird.
– Bei Änderung des Öffnungsweges wird der Korrekturwert immer berücksichtigt.

IDENT MODL20 – SOURCE ISCOS60 DATE 830520 TIME 15.20 VOLUME
Dieser Programmteil wird nur bei Einrichten in eine andere Betriebsart durchlaufen

| BM | /20 | | |
|----|-----|-----|----|
| IN | MAISTW | /382 | M. Auswerfer Istwert Weg (M. Eichzyklus) |
| AN | E4B6FS | /216 | 4B6 FSS-Kontakt |
| CA | /3B9 | | Verriegelungsmerker |
| BF | /1 | | |
| LC | /1F, 500 | | Konstante = 50,0 mm |
| AD | /4A, /1F | | Reg./4A = Formhöhe |
| AD | /0, /10C | | Reg./10C = Formöffnungsweite |
| LR | /4B, /O | | Reg./4C = Formöffnungsweite |
| LC | /E, 33 | | |
| BO | /E, /46, /0 | | Nach aux. Reg./21 Ventilkarte (Ziel) |
| BO | /4B, /47, /0 | | |
| SB | /3B9 | | Verriegelungsmerker |
| EL | /1 | | |
| IN | /44D | | Öffnungsweite erreicht |
| AN | /339 | | Programmteil durchlaufen |
| BF | /2 | | |
| AD | /10C, /4A | | Reg./10 C= Öffnungsweite; Reg./4A = Formhöhe |
| SU | /123, /0 | | Reg./123 = Istwert |

```
LR      /194, /0
SU      /4B, /194
LC      /F, /3
AD      /F, /0
LR      /7, /0
LC      /E, 33
BO      /E, /46, /0
BO      /7, /47, /0
RB      /3B9                Verriegelungsmerker
RB      MAISTW      /382    M. Auswerfer Istwert Weg (M. Eichzyklus)
EL      /2
```

|  | | |
|---|---|---|
| z. B. Istwert | 430,0 | Reg./123 |
| Formhöhe | −2,0 | Reg./4A |
| Öffnungsweite | −400,0 | Reg./10C |
| Summe | 28,0 | |
| | 452,0 | Reg./4B |
| Summe | −28,0 | |
| Neues korr. Ziel | 424,0 | |
| Überlaufkonst. | 3 | |
| Korr. Nettowert | 424,3 | Nach Ventilkarte |

Dieser Programmteil (Bis EL/19) wird
1. Bei Änderung eines WEGPKT durchlaufen (Datenblock nach Wegkarte)
2. Sämtliche WEGPKT werden zur Formhöhe addiert
3. Formöffnungsweite und Formhöhe
z.B. Konstante 50,3 mm
z.B. −10,3 Reg./194
Summe 40,0 mm
Formhöhe und Öffnungsweite +402,0
                        442,0 mm
                        nach Ventilkarte
                        Ziel

```
IN      /2E9
NO
BF      /19
LC      /10, 38
LC      /11,0
AD      /102, /4A
LR      /12, /0
AD      /103, /4A
LR      /13, /0
LC      /15,0
LC      /16,0
LC      /17,0
AD      /108, /4A
LR      /18, /0
AD      /109, /4A
LR      /19, /0
AD      /10A, /4A
LR      /1A, /0
AD      /10B, /4A
LR      /1B, /0
AD      /4A, /10C
LR      /1C, /0
AD      /10D, /4A
LR      /1D, /0
AD      /10E, /4A
LR      /1E, /0
MA      /3, /E
BO      /10, /26, /0
LC      /F, 503
SU      /F, /194
```

```
LR      /F, /0
AD      /F, /1C
LR      /F, /0
LC      /E, 33
BO      /E, /46,0
BO      /F, /47,0
```

Selbstverständlich können auch andere Rechner mit einem Programm in einer anderen Sprache eingesetzt werden.

**Patentansprüche**

1. Spritzgiessmaschine (1) mit einer mit einem Wegmesssystem (7) gekoppelten Formaufspannplatte (3), einem beidseitig beaufschlagbaren hydraulischen Arbeitszylinder (9) zur Betätigung der Formaufspannplatte (3) und einer hydraulischen Steuerung mit mindestens einem vorgesteuerten ⅓-Wegeventile (17), zur Steuerung des Arbeitszylinders (9), dadurch gekennzeichnet, dass das vorgesteuerte ⅓-Wegeventil ein hydraulisch vorgesteuertes federzentriertes ⅓-Wegeventil (17) ist, die Steuerkolben des ⅓-Wegeventils (17) und seines ⅓-Vorsteuerwegeventils (34) jeweils mit einem Wegmesssystem (40 bzw. 41) unter Bildung eines Regelkreises gekoppelt sind, dem Wegmesssystem (7) für die verschiebbare Formaufspannplatte (3) ein Rechner (47) nachgeschaltet ist, der aus dem die Iststellung der verschiebbaren Formaufspannplatte (3) repräsentierenden Wert die Abweichung von der Sollstellung errechnet und dann einen Korrekturwert bildet, der zu dem Sollwert für die Stellung der verschiebbaren Formaufspannplatte hinzuaddiert und als korrigierter Sollwert einer Vergleichsstelle (43) zugeführt ist, an der er mit dem Ausgangssignal des Wegmesssystems (40) des federzentrierten Hauptsteuerventils (17) verglichen ist, dass das von der Vergleichsstelle (43) gebildete Differenzsignal einer weiteren Vergleichsstelle (45) zugeführt ist, an der es mit dem Ausgangssignal des Wegmesssystems (41) des Vorsteuerventils (34) verglichen ist, und dass das in der weiteren Vergleichsstelle (45) gebildete Vergleichssignal einem proportional wirkenden Stellantrieb (42) des Vorsteuerventils (34) zugeführt ist.

2. Spritzgiessmaschine nach Anspruch 1, dadurch gekennzeichnet, dass der Steuerkolben (22) des hydraulisch vorgesteuerten federzentrierten ⅔-Wegeventils (17) ein oszillierender Steuerkolben ist.

**Claims**

1. An injection moulding machine (1) comprising a die carrier plate (3) coupled with a displacement measuring system (7), an hydraulic two-way chargeable working cylinder (9) for actuating the die carrier plate (3) and an hydraulic control system with at least one balanced ⅔ way-valve (17) for controlling the working cylinder (9), characterised in that the balanced ⅔ way-valve is an hydraulically balanced spring-centred ⅔ way-valve (17), the control pistons of the ⅔ way-valve (17) and its ⅔ way-pilot valve (34) being respectively coupled with a displacement measuring system (40, 41) and forming thereby a control and regulating circuit, that the distance measuring system (7) for the slidable die carrier plate (3) is associated with a computer (47) arranged in succession therewith which calculates from the value representing the actual position of the slidable die carrier plate (3) the deviation from the designed position and then forms a corrective value which is added to the designed value for the position of the slidable die carrier plate and applied as a corrected designed value to a comparator device (43) where it is compared with the output signal of the displacement measuring system (40) for the spring-centred main control valve (17), that the difference signal formed by the comparator device (43) is applied to a further comparator device (45) where it is compared with the output signal of the displacement measuring system (41) of the pilot valve (34), and in that the comparative signal formed at said further comparator device (45) is applied to a proportionally acting servo-drive (42) of the pilot valve (34).

2. An injection moulding machine according to Claim 1, characterised in that the control piston (22) of the hydraulic pre-controlled, spring-centred ⅔ way-valve (17) is an oscillating control piston.

**Revendications**

1. Machine de moulage par injection (1) avec un plateau de fixation de moule (3) couplé avec un système de mesure de déplacement (7), un vérin hydraulique (9) pouvant être alimenté des deux côtés pour l'actionnement du plateau de fixation de moule (3), et une commande hydraulique avec au moins une vanne pilotée à ⅔ voies (17) pour la commande du vérin hydraulique (9), caractérisée en ce que la vanne pilotée à ⅔ voises est une vanne à ⅔ voises (17) pilotée hydrauliquement et centrée par ressort; que les pistons distributeurs de la vanne à ⅔ voies (17) et de sa vanne-pilote à ⅔ voies (34) sont couplés respectivement avec un système de mesure de déplacement (40 et respectivement 41), avec formation d'un circuit de réglage; que le système de mesure de déplacement (7) pour le plateau de fixation de moule (3) mobile est suivi d'un calculateur (47) qui, à partir de la valeur représentant la position effective du plateau de fixation de moule (3) mobile, calcule l'écart par rapport à la position théorique et forme ensuite une valeur de correction qui, additionnée à la valeur de consigne pour la position du plateau de fixation de moule mobile est transmise, en tant que valeur de consigne corrigée, à une unité de comparaison (43) où elle est comparée avec le signal de sortie du système de mesure de déplacement (17); que le signal différentiel formé par l'unité de comparaison (43) est transmis à une autre unité de comparaison (45) où il est comparé avec le signal de sortie du système de mesure de déplacement (41) de la vanne-pilote (34); et que le signal de comparaison formé dans la deuxième unité de comparaison est envoyé à un servomoteur à action proportionnelle (42) de la vanne-pilote (34).

2. Machine de moulage par injection selon la revendication 1, caractérisée en ce que le piston distributeur (22) de la vanne à ⅔ voies (17) pilotée hydrauliquement et centrée par ressort est un piston distributeur oscillant.

# F i g.1

0135652

F i g.2